# EUROPÄISCHE PATENTSCHRIFT

(11) **EP 3 546 419 B1**
(45) Veröffentlichungstag und Bekanntmachung des Hinweises auf die Patenterteilung: **19.08.2020**
(21) Anmeldenummer: 19159274.0
(22) Anmeldetag: 26.02.2019
(51) Int. Cl.: B66F 9/075, B66F 9/24, B66F 17/00, G01S 5/00, G01S 13/93

(54) **VERFAHREN UND SYSTEM ZUR KOLLISIONSVERMEIDUNG IN EINEM GEFAHRENBEREICH EINER WARENLOGISTIKEINRICHTUNG**
METHOD AND SYSTEM FOR COLLISION AVOIDANCE IN A DANGER AREA OF A GOODS LOGISTICS FACILITY
PROCÉDÉ ET SYSTÈME PERMETTANT D'ÉVITER LES COLLISIONS DANS UNE ZONE DANGEREUSE D'UN DISPOSITIF DE LOGISTIQUE DES MARCHANDISES

(30) Priorität: 05.03.2018 DE 102018104992
(43) Veröffentlichungstag der Anmeldung: 02.10.2019
(73) Patentinhaber: Jungheinrich Aktiengesellschaft, 22047 Hamburg (DE)
(72) Erfinder: Grabbe, Florian, 22335 Hamburg (DE); Ahrens, Stefan, 25462 Rellingen (DE); Heise, Sven-Ole, 24783 Osterrönfeld (DE); Kopelke, Jan, 22337 Hamburg (DE); Altmann, Tony, 24616 Brokstedt (DE); Dr. Riesenhuber, Felix, 24118 Kiel (DE)
(74) Vertreter: Seemann & Partner Patentanwälte mbB

(56) Entgegenhaltungen:
- EP-A1- 3 035 074
- DE-A1-102008 017 129
- US-A1- 2007 120 672

## Beschreibung

Die Erfindung betrifft ein Verfahren zur Kollisionsvermeidung in einem Gefahrenbereich einer Warenlogistikeinrichtung und ein System zur Kollisionsvermeidung in einem Gefahrenbereich einer Warenlogistikeinrichtung.

Bei dem Betrieb von Flurförderzeugen, wie sie in Warenlogistikeinrichtungen eingesetzt werden, ist es sinnvoll, die Unfalls- und Kollisionsgefahr zu minimieren. Solche Warenlogistikeinrichtungen, wie zum Beispiel Lager- oder Industriehallen, weisen häufig beengte Räumlichkeiten auf. Gefahrenbereiche, in denen es verstärkt zu Kollisionen zwischen Flurförderzeugen und Personen oder anderen Flurförderzeugen kommt, sind beispielsweise schwer einsehbare Kreuzungen oder Hallenausfahrten.

Vor diesem Hintergrund ist der Einsatz von Systemen zur Kollisionsvermeidung sinnvoll, die Personen und andere Flurförderzeuge auf die Anwesenheit eines sich nähernden Flurförderzeugs hinweisen. Die DE 10 2008 017 129 A1 offenbart die Oberbegriffe der beiden unabhängigen Ansprüche 1 und 10. Zu dem oben genannten Zweck sind Flurförderzeuge häufig mit Lichtsignalen oder akustischen Signalen ausgestattet. Akustische Signale werden jedoch auf Grund von Umgebungsgeräuschen überhört. Lichtsignale sind hingegen nur bei Sichtkontakt zum Flurförderzeug gut zu erkennen und können auf Grund von anderen Lichtsignalen übersehen werden.

Eine andere Möglichkeit bieten Geschwindigkeitsbegrenzungen für Flurförderzeuge in Gefahrenbereichen. Jedoch kann nicht immer sichergestellt werden, dass die Fahrer der Flurförderzeuge die Geschwindigkeitsbegrenzungen einhalten. Zudem wird die Produktivität in der Warenlogistikeinrichtung unnötig reduziert, wenn die Fahrer der Flurförderzeuge in Gefahrenbereichen auch dann ihre Geschwindigkeit begrenzen, wenn überhaupt keine Kollisionsgefahr besteht.

Die Aufgabe der Erfindung besteht darin, ein System und ein Verfahren zur Kollisionsüberwachung in einem Gefahrenbereich einer Warenlogistikeinrichtung zur Verfügung zu stellen, die gleichzeitig eine hohe Sicherheit erreichen, ohne den Betrieb der Warenlogistikeinrichtung unnötig zu behindern.

Diese Aufgabe wird gelöst durch ein Verfahren zur Kollisionsvermeidung in einem Gefahrenbereich einer Warenlogistikeinrichtung, wobei ein erster Abstand zwischen einer ortsfesten Gefahrenbereichskontrollvorrichtung, die innerhalb des Gefahrenbereichs angeordnet ist, und einer ersten Sende- und Empfangsvorrichtung ermittelt wird, wobei ein zweiter Abstand zwischen der Gefahrenbereichskontrollvorrichtung und einer zweiten Sende- und Empfangsvorrichtung ermittelt wird, wobei die erste Sende- und Empfangsvorrichtung an einem Flurförderzeug angeordnet und mit einem Steuerungssystem des Flurförderzeugs verbunden ist, und die zweite Sende- und Empfangsvorrichtung an einem beweglichen Objekt angeordnet ist, wobei das Verfahren dadurch weitergebildet ist, dass ermittelt wird, ob der erste Abstand und der zweite Abstand kleiner oder gleich einem vorgebbaren Eingriffsbereichsabstand sind, wobei eine Kollisionsvermeidungsaktion ausgeführt wird, wenn sowohl der erste Abstand als auch der zweite Abstand kleiner oder gleich dem vorgebbaren Eingriffsbereichsabstand sind.

Vorzugsweise wird der erste Abstand mittels Laufzeitmessung eines Signals zwischen der Gefahrenbereichskontrollvorrichtung und der ersten Sende- und Empfangsvorrichtung und/oder der zweite Abstand mittels Laufzeitmessung eines Signals zwischen der Gefahrenbereichskontrollvorrichtung und der zweiten Sende- und Empfangsvorrichtung ermittelt. Alternativ oder zusätzlich wird der erste Abstand und/oder der zweite Abstand über eine Messung einer Signalstärke eines Signals ermittelt. Weiterhin alternativ oder zusätzlich kann der erste Abstand und/oder der zweite Abstand mittels Triangulation bestimmt werden, wobei insbesondere die Gefahrenbereichskontrollvorrichtung mehrere räumlich voneinander getrennte Triangulationseinheiten umfasst.

Weiterhin vorzugsweise wird als Kollisionsvermeidungsaktion eine Geschwindigkeit des Flurförderzeugs begrenzt. Alternativ oder zusätzlich wird als Kollisionsvermeidungsaktion eine Warnung am Ort des Flurförderzeugs, am Ort des beweglichen Objekts und/oder am Ort der Gefahrenbereichskontrollvorrichtung ausgegeben, wobei es sich bei Warnung um eine optische, akustische und/oder haptische Warnung handelt. Zusätzlich oder alternativ wird als Kollisionsvermeidungsaktion in ein Steuerungssystem des Flurförderzeugs eingegriffen.

Durch den Eingriffsbereichsabstand wird ein kreisförmiger Eingriffsbereich beziehungsweise kugelförmiger Eingriffsbereich bei dreidimensionaler Betrachtung um die Gefahrenbereichskontrollvorrichtung aufgespannt. Der Eingriffsbereich ist der Bereich, in dem das Verfahren unter der genannten Bedingung eingreift, um die Geschwindigkeit des Flurförderzeugs zu begrenzen. Vorteilhaft liegt der Gefahrenbereich vollständig innerhalb des Eingriffsbereichs oder der Gefahrenbereich entspricht im Wesentlichen dem Eingriffsbereich. Die Geschwindigkeit des Flurförderzeugs wird im Eingriffsbereich derart begrenzt, dass die Wahrscheinlichkeit einer Kollision zwischen Flurförderzeug und beweglichem Objekt im Wesentlichen eliminiert wird. Dies geschieht vorzugsweise ohne Zutun des Fahrers des Flurförderzeugs, so dass, selbst wenn der Fahrer die Gefahrenzone übersieht oder ignoriert, die Geschwindigkeit begrenzt wird. Auf diese Weise wird die Sicherheit in den Gefahrenbereichen der Warenlogistikeinrichtung erhöht.

Weiterhin vorteilhaft wird mit diesem Verfahren im Eingriffsbereich die Geschwindigkeit des Flurförderzeugs nur dann begrenzt, wenn sich neben dem Flurförderzeug ebenfalls ein bewegliches Objekt in diesem Eingriffsbereich aufhält, denn nur in diesem Fall besteht im Gefahrenbereich eine Kollisionsgefahr zwischen dem Flurförderzeug und dem beweglichen Objekt. Eine unnötige Beeinträchtigung der Produktivität in der Warenlogistikeinrichtung wird somit vermieden.

Unter einem beweglichen Objekt wird im Rahmen dieser Anmeldung beispielsweise eine Person, ein Flurförderzeug, oder auch ein sich in der Warenlogistikeinrichtung befindlicher PKW oder LKW verstanden.

Weiterhin wird als bewegliches Objekt eine Warneinheit, beispielsweise ein Warnschild, verstanden. Wird das Warnschild mit der zweiten Sende- und Empfangsvorrichtung in dem Eingriffsbereich angeordnet, wird für jedes in den Eingriffsbereich einfahrende Flurförderzeug eine Kollisionsvermeidungsaktion ausgeführt, da sich das Warnschild als bewegliches Objekt bereits im Eingriffsbereich befindet. Dadurch kann beispielsweise ein temporärer Bereich mit einer Geschwindigkeitsbegrenzung für Flurförderzeuge eingerichtet werden, z.B. in Bereich von Baustellen.

Unter einer Warenlogistikeinrichtung wird beispielsweise eine Lagerhalle, eine Industriehalle, eine Werkstatthalle oder ein zusammenhängender Komplex solcher Hallen sowie gegebenenfalls das umliegende Betriebsgelände verstanden. Unter einem Gefahrenbereich wird ein Bereich innerhalb einer Warenlogistikeinrichtung verstanden, in dem eine erhöhte Kollisionsgefahr zwischen einem Flurförderzeug und einem beweglichen Objekt besteht. Solche Gefahrenbereiche sind beispielsweise schwer einsehbare Kreuzungen oder Hallenausfahrten.

Im Gegensatz zu anderen Verfahren zur Kollisionsvermeidung, bei denen die Position des Flurförderzeugs und des beweglichen Objekts genau bestimmt werden muss, beispielsweise in Bezug zu einem Koordinatensystem, ist eine derartige Positionsbestimmung für das erfindungsgemäße Verfahren überflüssig. Dadurch entfällt auch die Notwendigkeit des Einsatzes von Ortungsvorrichtungen zur Positionsbestimmung. Auch die Sende- und Empfangsvorrichtungen an dem Flurförderzeug und dem beweglichen Objekt können deutlich simpler, insbesondere mit nur einer Antenne, ausgebildet sein. Im Vergleich zu Verfahren, die beispielsweise über Laufzeitmessungen direkt den Abstand zwischen dem Flurförderzug und dem beweglichen Objekt bestimmen, wird durch das erfindungsgemäße Verfahren eine Kollisionsgefahr gezielt in Gefahrenbereichen reduziert. Somit stellt das erfindungsgemäße Verfahren eine kostengünstige Möglichkeit zur Kollisionsvermeidung in einem Gefahrenbereich dar.

Um die Kollisionsgefahr in dem Gefahrenbereich zu minimieren, wird vorteilhaft jedes Flurförderzeug und jede Person in der Warenlogistikeinrichtung mit einer Sende- und Empfangsvorrichtung ausgestattet. Befinden sich beispielsweise sowohl ein erstes Flurförderzeug als auch ein zweites Flurförderzeug innerhalb des Eingriffsbereichs, wird die Geschwindigkeit des ersten Flurförderzeugs begrenzt, da sich neben dem ersten Flurförderzeug ein weiteres bewegliches Objekt, das zweite Flurförderzeug, im Eingriffsbereich befindet. Gleichzeitig wird auch die Geschwindigkeit des zweiten Flurförderzeugs begrenzt, da sich neben dem zweiten Flurförderzeug ebenfalls ein weiteres bewegliches Objekt, in diesem Fall das erste Flurförderzeug, in dem Eingriffsbereich aufhält.

Zur Bestimmung des ersten Abstands ist gemäß einer Ausführungsform vorgesehen, ein Signal von der ersten Sende- und Empfangsvorrichtung zur Gefahrenbereichskontrollvorrichtung zu senden, wobei anschließend von der Gefahrenbereichskontrollvorrichtung ein Signal zurück zur ersten Sende- und Empfangsvorrichtung gesendet wird. In dieser Ausführungsform wird der erste Abstand durch Laufzeitmessung von der ersten Sende- und Empfangsvorrichtung oder von dem mit ihr verbundenen Steuerungssystem des Flurförderzeugs bestimmt.

Alternativ wird zuerst ein Signal von der Gefahrenbereichskontrollvorrichtung an die erste Sende- und Empfangsvorrichtung und anschließend von letzterer ein Signal zurück an die Gefahrenbereichskontrollvorrichtung gesendet. Gemäß dieser alternativen Ausführungsform wird der erste Abstand durch Laufzeitmessung von der Gefahrenbereichskontrollvorrichtung bestimmt. Analog wird der zweite Abstand entweder von der Gefahrenbereichskontrollvorrichtung oder von der zweiten Sende- und Empfangsvorrichtung bestimmt.

Werden die Abstände von den Sende- und Empfangsvorrichtungen beziehungsweise dem Steuerungssystem des Flurförderzeugs bestimmt, wird der erste Abstand durch Signalübertragung von der ersten Sende- und Empfangsvorrichtung an die Gefahrenbereichskontrollvorrichtung und der zweite Abstand durch Signalübertragung von der zweiten Sende- und Empfangsvorrichtung an die Gefahrenbereichskontrollvorrichtung übermittelt. Somit werden der erste Abstand und der zweite Abstand von den Orten, an denen sie ermittelt wurden, an einen gemeinsamen Ort übermittelt, nämlich die Gefahrenbereichskontrollvorrichtung.

In jedem Fall ist vorzugsweise sowohl der erste Abstand als auch der zweite Abstand am Ort der Gefahrenbereichskontrollvorrichtung verfügbar.

Die Ermittlung, ob der erste Abstand und der zweite Abstand kleiner oder gleich dem vorgebbaren Eingriffsbereichsabstand ist, wird in einer ersten Ausführungsform von dem Steuerungssystem des Flurförderzeugs durchgeführt. In dieser Ausführungsform wird der zweite Abstand, und, falls der erste Abstand von der Gefahrenbereichskontrollvorrichtung ermittelt wurde, auch der erste Abstand von der Gefahrenbereichskontrollvorrichtung an die erste Sende- und Empfangsvorrichtung übermittelt. Anschließend begrenzt das Steuerungssystem die Geschwindigkeit des Flurförderzeugs, wenn sowohl der erste Abstand als auch der zweite Abstand kleiner oder gleich dem vorgebbaren Eingriffsbereichsabstand ist, beispielsweise indem es eine Bremse und/oder einen Antrieb des Flurförderzeugs ansteuert. Das Steuerungssystem umfasst in dieser Ausführungsform insbesondere eine Datenverarbeitungseinrichtung, beispielsweise einen Computer.

In einer alternativen Ausführungsform wird die Ermittlung direkt von der Gefahrenbereichskontrollvorrichtung durchgeführt. Dieser sind der erste Abstand und der zweite Abstand wie zuvor ausgeführt bereits bekannt. Anschließend greift die Gefahrenbereichskontrollvorrichtung durch Signalübertragung mit der ersten Sende- und Empfangsvorrichtung in das Steuerungssystem des Flurförderzeugs ein, um die Geschwindigkeit des Flurförderzeugs zu begrenzen, wenn sowohl der erste Abstand als auch der zweite Abstand kleiner oder gleich dem vorgebbaren Eingriffsbereichsabstand ist. In dieser Ausführungsform kann das Steuerungssystem des Flurförderzeugs relativ einfach ausgebildet sein, während die Gefahrenbereichskontrollvorrichtung insbesondere als Datenverarbeitungseinrichtung ausgebildet ist.

Eine direkte Signalübertragung zwischen der ersten Sende- und Empfangsvorrichtung und der zweiten Sende- und Empfangsvorrichtung findet in keiner der beschriebenen Ausführungsformen des erfindungsgemäßen Verfahrens statt.

Bevorzugt wird das Flurförderzeug auf eine vorgebbare Sicherheitsgeschwindigkeit abgebremst, wenn sowohl der erste Abstand als auch der zweite Abstand kleiner oder gleich dem vorgebbaren Eingriffsbereichsabstand ist und eine Geschwindigkeit des Flurförderzeugs größer als die vorgebbare Sicherheitsgeschwindigkeit ist. Dies geschieht insbesondere über einen Eingriff auf das Steuerungssystem des Flurförderzeugs.

Auf diese Weise kann vorteilhaft eine Sicherheitsgeschwindigkeit für den Eingriffsbereich vorgegeben und das Flurförderzeug auf diese Sicherheitsgeschwindigkeit abgebremst werden, falls die aktuelle Geschwindigkeit des Flurförderzeugs über der Sicherheitsgeschwindigkeit liegt.

Die Sicherheitsgeschwindigkeit ist bevorzugt größer als null. Das Flurförderzeug wird mit anderen Worten durch das Verfahren somit nicht bis zum Stillstand abgebremst. Ein Stillstand ist bei einem rechtzeitigen Abbremsen des Flurförderzeugs zur Vermeidung einer Kollision nicht notwendig und führt zu einer unnötigen Senkung der Produktivität in der Warenlogistikeinrichtung. Zudem könnten in diesem Fall zwei durch das Verfahren in dem Eingriffsbereich zum Stillstand gebrachte Flurförderzeuge diesen nicht mehr aus eigener Kraft verlassen, ohne die Gefahrenbereichskontrollvorrichtung zu deaktivieren.

Weiterhin bevorzugt wird der Eingriffsbereichsabstand so vorgegeben, dass eine erste Kommunikationsreichweite zwischen Gefahrenbereichskontrollvorrichtung und der ersten Sende- und Empfangsvorrichtung und/oder eine zweite Kommunikationsreichweite zwischen Gefahrenbereichskontrollvorrichtung und der zweiten Sende- und Empfangsvorrichtung größer als der Eingriffsbereichsabstand ist, wobei die erste Kommunikationsreichweite einer maximalen Entfernung entspricht, bei der der erste Abstand mittels Laufzeitmessung zuverlässig bestimmbar ist und die zweite Kommunikationsreichweite einer maximalen Entfernung entspricht, bei der der zweite Abstand mittels Laufzeitmessung zuverlässig bestimmbar ist.

Demnach ist ein Abstand größer als die Kommunikationsreichweite, wenn die Bestimmung dieses Abstands zumindest gelegentlich fehlschlägt, da eine Signalstärke des für die Laufzeitmessung übermittelten Signals für eine zuverlässige Laufzeitmessung nicht mehr groß genug ist.

Durch das Vorgeben eines Eingriffsbereichsabstands, der kleiner als die erste und die zweite Kommunikationsreichweite ist, wird sichergestellt, dass für das Flurförderzeug und das bewegliche Objekt sowohl das Eintreten in den Eingriffsbereich als auch das Verlassen des Eingriffsbereichs zuverlässig registriert wird. Zudem wird vorteilhaft sichergestellt, dass die Ausdehnung des Eingriffsbereichs fest definiert ist und nicht von den individuellen Signalstärken der für die Laufzeitmessungen übermittelten Signale und/oder der Güte der individuellen Empfangsmittel abhängen, die die Sende- und Empfangsvorrichtungen und/oder die Gefahrenbereichskontrollvorrichtung aussenden beziehungsweise aufweisen. Dies ist insbesondere sinnvoll, wenn sich diese individuelle Signalstärke und/oder Güte der Empfangsmittel beispielsweise durch Beschädigungen oder Abnutzung verändert.

In einer bevorzugten Ausführungsform wird auf einem Speichermedium der Gefahrenbereichskontrollvorrichtung eine Kontrollliste gespeichert, wobei ein erster Aufenthaltseintrag in die Kontrollliste eingetragen wird, wenn der erste Abstand kleiner oder gleich einem Kontrollbereichsabstand ist und der erste Aufenthaltseintrag noch nicht in die Kontrollliste eingetragen ist, wobei der erste Aufenthaltseintrag aus der Kontrollliste ausgetragen wird, wenn der erste Abstand größer als der Kontrollbereichsabstand ist, wobei insbesondere der Kontrollbereichsabstand größer als der Eingriffsbereichsabstand ist, wobei insbesondere der Kontrollbereichsabstand einer ersten Kommunikationsreichweite zwischen Gefahrenbereichskontrollvorrichtung und erster Sende- und Empfangsvorrichtung entspricht. Bevorzugt wird ein zweiter Aufenthaltseintrag in die Kontrollliste eingetragen, wenn der zweite Abstand kleiner oder gleich dem Kontrollbereichsabstand ist und der zweite Aufenthaltseintrag noch nicht in die Kontrollliste eingetragen ist, wobei der zweite Aufenthaltseintrag aus der Kontrollliste ausgetragen wird, wenn der zweite Abstand größer als der Kontrollbereichsabstand ist.

Durch den Kontrollbereichsabstand wird ein kreisförmiger Kontrollbereich, beziehungsweise kugelförmiger Kontrollbereich bei dreidimensionaler Betrachtung, um die Gefahrenbereichskontrollvorrichtung aufgespannt. Befindet sich das Flurförderzeug in dem Kontrollbereich, wird es in die Liste eingetragen. Verlässt es den Kontrollbereich wieder, wird es aus der Kontrollliste ausgetragen. Für das bewegliche Objekt geschieht dies analog. Insbesondere liegt der Eingriffsbereich vollständig innerhalb des Kontrollbereichs. Durch Einblenden der Kontrollliste auf einer Anzeige ist es möglich, den Fahrer des Flurförderzeugs oder andere Personen über die Anwesenheit des Flurförderzeugs und/oder des beweglichen Objekts in dem Kontrollbereich zu informieren.

Vorteilhaft wird eine Kontrollliste aller mit Sende- und Empfangsvorrichtungen ausgestatteten Flurförderzeuge und beweglichen Objekte im Kontrollbereich auf dem Speichermedium gespeichert.

Der Kontrollbereichsabstand entspricht bevorzugt der Kommunikationsreichweite, damit der erste Aufenthaltseintrag und/oder der zweite Aufenthaltseintrag rechtzeitig in die Kontrollliste eingetragen werden können, bevor das Flurförderzeug und/oder das bewegliche Objekt in den Eingriffsbereich eintreten.

Auf einer Anzeige des Flurförderzeugs wird bevorzugt eine Warnung angezeigt und/oder am Flurförderzeug eine akustische Warnung ausgegeben, solange der erste Aufenthaltseintrag und der zweite Aufenthaltseintrag in der Kontrollliste eingetragen sind.

Dadurch ist es dem Fahrer des Flurförderzeugs möglich, die Anwesenheit des beweglichen Objekts im Kontrollbereich wahrzunehmen, auch wenn eine direkte Sicht auf das bewegliche Objekt versperrt ist. Entspricht der Kontrollbereich dem Eingriffsbereich, wird der Fahrer des Flurförderzeugs auf diese Weise zusätzlich gewarnt. Ist der Kontrollbereich größer als der Eingriffsbereich, kann der Fahrer des Flurförderzeugs bereits auf eine mögliche Kollisionsgefahr hingewiesen werden, bevor die Geschwindigkeit des Flurförderzeugs begrenzt werden muss.

Gemäß einer Ausführungsform werden innerhalb des Kontrollbereichs unterschiedliche Aktionsabstände festgelegt, bei denen unterschiedliche Mitteilungen an ein Flurförderzeug und/oder eine Person ausgegeben werden, wenn der erste Abstand und der zweite Abstand kleiner oder gleich diesen Aktionsabständen sind. So kann beispielsweise bei Unterschreiten eines ersten Aktionsabstands eine Warnung auf einer Anzeige des Flurförderzeugs ausgegeben werden. Wird zudem ein zweiter Aktionsabstand unterschritten, wird außerdem eine akustische Warnung am Flurförderzeug ausgegeben. Hierbei ist insbesondere der zweite Aktionsabstand kleiner als der erste Aktionsabstand. Wird schließlich auch der Eingriffsbereichsabstand unterschritten, wird zusätzlich das Flurförderzeug abgebremst. Der Eingriffsbereichsabstand ist vorzugsweise kleiner oder gleich dem zweiten Aktionsabstand.

Die Laufzeitmessung des Signals zwischen der Gefahrenbereichskontrollvorrichtung und der ersten Sende- und Empfangsvorrichtung und/oder die Laufzeitmessung des Signals zwischen der Gefahrenbereichskontrollvorrichtung und der zweiten Sende- und Empfangsvorrichtung und/oder andere Signalübertragungen zwischen der ersten Sende- und Empfangsvorrichtung und der Gefahrenbereichskontrollvorrichtung und/oder zwischen der zweiten Sende- und Empfangsvorrichtung und der Gefahrenbereichskontrollvorrichtung werden bevorzugt mittels Ultra-Breitband-Technologie durchgeführt.

Wird das Verfahren zur Kollisionsvermeidung als Teil eines Ortungssystems zur Positionserfassung eingesetzt, werden vorzugsweise die zur Positionserfassung in dem Ortungssystem notwendigen Datenübertragungen mittels Ultra-Breitband-Technologie und die Signalübertragungen für das Verfahren zur Kollisionsvermeidung in einem Gefahrenbereich mittels einer weiteren Kommunikationstechnik durchgeführt, beispielsweise über WLAN oder ZigBee.

Weiterhin wird die Aufgabe gelöst durch ein System zur Kollisionsvermeidung in einem Gefahrenbereich einer Warenlogistikeinrichtung, wobei das System eine ortsfeste Gefahrenbereichskontrollvorrichtung, die innerhalb des Gefahrenbereichs angeordnet ist, eine erste Sende- und Empfangsvorrichtung, die an einem Flurförderzeug angeordnet und mit einem Steuerungssystem des Flurförderzeugs verbunden ist, und eine zweite Sende- und Empfangsvorrichtung, die an einem beweglichen Objekt angeordnet ist, umfasst, wobei das System dazu eingerichtet ist, einen ersten Abstand zwischen der Gefahrenbereichskontrollvorrichtung und der ersten Sende- und Empfangsvorrichtung und einen zweiten Abstand zwischen der Gefahrenbereichskontrollvorrichtung und der zweiten Sende- und Empfangsvorrichtung zu ermitteln, das dadurch weitergebildet ist, dass das System dazu eingerichtet ist, zu ermitteln, ob der erste Abstand und der zweite Abstand kleiner oder gleich einem vorgebbaren Eingriffsbereichsabstand sind, wobei das System ferner dazu eingerichtet ist, eine Kollisionsvermeidungsaktion auszuführen, wenn sowohl der erste Abstand als auch der zweite Abstand kleiner oder gleich dem vorgebbaren Eingriffsbereichsabstand sind.

Vorzugsweise ist das System dazu eingerichtet, den ersten Abstand mittels Laufzeitmessung eines Signals zwischen der Gefahrenbereichskontrollvorrichtung und der ersten Sende- und Empfangsvorrichtung und/oder den zweiten Abstand mittels Laufzeitmessung eines Signals zwischen der Gefahrenbereichskontrollvorrichtung und der zweiten Sende- und Empfangsvorrichtung zu ermitteln.

Weiterhin vorzugsweise ist das System dazu eingerichtet, als Kollisionsvermeidungsaktion eine Geschwindigkeit des Flurförderzeugs zu begrenzen. Alternativ wird als Kollisionsvermeidungsaktion eine Warnung am Ort des Flurförderzeugs, am Ort des beweglichen Objekts und/oder am Ort der Gefahrenbereichskontrollvorrichtung ausgegeben, wobei es sich bei Warnung um eine optische, akustische oder haptische Warnung handelt. Zusätzlich oder alternativ wird als Kollisionsvermeidungsaktion in das Steuerungssystem des Flurförderzeugs eingegriffen.

Bevorzugt ist das System dazu eingerichtet, das Flurförderzeug auf eine vorgebbare Sicherheitsgeschwindigkeit abzubremsen, wenn sowohl der erste Abstand als auch der zweite Abstand kleiner oder gleich dem vorgebbaren Eingriffsbereichsabstand ist und eine Geschwindigkeit des Flurförderzeugs größer als die vorgebbare Sicherheitsgeschwindigkeit ist.

Weiterhin ist der Eingriffsbereichsabstand bevorzugt so vorgegeben, dass eine erste Kommunikationsreichweite zwischen Gefahrenbereichskontrollvorrichtung und der ersten Sende- und Empfangsvorrichtung und/oder eine zweite Kommunikationsreichweite zwischen Gefahrenbereichskontrollvorrichtung und der zweiten Sende- und Empfangsvorrichtung größer als der Eingriffsbereichsabstand ist, wobei die erste Kommunikationsreichweite einer maximalen Entfernung entspricht, bei der der erste Abstand mittels Laufzeitmessung zuverlässig bestimmbar ist und die zweite Kommunikationsreichweite einer maximalen Entfernung entspricht, bei der der zweite Abstand mittels Laufzeitmessung zuverlässig bestimmbar ist.

Das System ist bevorzugt dazu eingerichtet, für die Laufzeitmessung des Signals zwischen der Gefahrenbereichskontrollvorrichtung und der ersten Sende- und Empfangsvorrichtung und/oder für die Laufzeitmessung des Signals zwischen der Gefahrenbereichskontrollvorrichtung und der zweiten Sende- und Empfangsvorrichtung und/oder für andere Signalübertragungen zwischen der ersten Sende- und Empfangsvorrichtung und der Gefahrenbereichskontrollvorrichtung und/oder zwischen der zweiten Sende- und Empfangsvorrichtung und der Gefahrenbereichskontrollvorrichtung Ultra-Breitband-Technologie einzusetzen.

Das System zur Kollisionsvermeidung verkörpert die gleichen Vorteile, Merkmale und Eigenschaften wie das zuvor beschriebene Verfahren zur Kollisionsvermeidung.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Warenlogistikeinrichtung mit Gefahrenbereichen und Gefahrenbereichskontrollvorrichtungen,
- Fig. 2: eine schematische Darstellung eines Gefahrenbereichs, eines Eingriffsbereichs und eines Kontrollbereichs,
- Fig. 3a: eine schematische Darstellung einer Gefahrenbereichskontrollvorrichtung,
- Fig. 3b: eine schematische Darstellung einer Kontrollliste mit Aufenthaltseintragungen.

In den Zeichnungen sind jeweils gleiche oder gleichartige Elemente und/oder Teile mit denselben Bezugsziffern versehen, so dass von einer erneuten Vorstellung jeweils abgesehen wird.

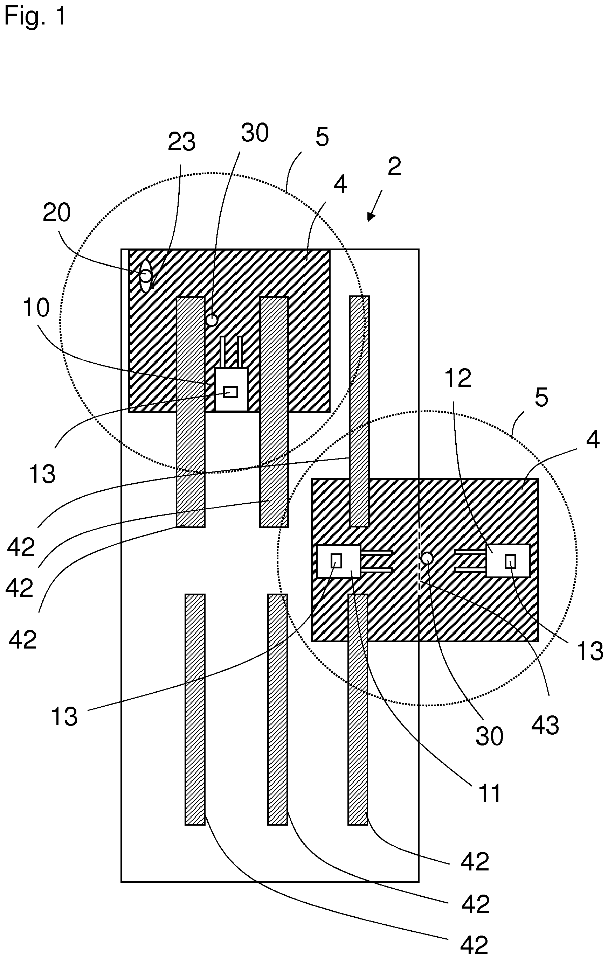

In Fig. 1 ist schematisch eine Warenlogistikeinrichtung 2 dargestellt, beispielsweise eine Lagerhalle und das umliegende, von Flurförderzeugen befahrbare, Betriebsgelände. Innerhalb der Warenlogistikeinrichtung 2 existieren einige Gefahrenbereiche 4, in denen eine erhöhte Kollisionsgefahr zwischen Flurförderzeugen 10, 11, 12 und beweglichen Objekten, beispielsweise anderen Flurförderzeugen 10, 11, 12 oder Personen 20, besteht. Ein solcher Gefahrenbereich 4 ist beispielsweise am Ausgang eines Korridors zwischen mehreren Regalen 42 oder bei der Hallenausfahrt 43 gegeben. In Fig. 1 sind diese zwei Gefahrenbereiche 4 beispielhaft als Rechtecke mit einer gestrichelten Markierung dargestellt, die den Bereich um eine Korridorausfahrt zwischen zwei Regalen 42 sowie eine Hallenausfahrt 43 einschließen. Der Übersichtlichkeit halber sind andere Gefahrenbereiche in der Warenlogistikeinrichtung nicht markiert, obwohl auch bei anderen Korridorausfahrten Gefahrenbereiche bestehen könnten. Die rechteckige Form der Gefahrenbereiche 4 ist aus Gründen der besseren Darstellbarkeit gewählt und entspricht nicht notwendigerweise der tatsächlichen Form eines Gefahrenbereichs 4.

Um Kollisionen in den Gefahrenbereichen 4 zu vermeiden, sind in den Gefahrenbereichen 4 Gefahrenbereichskontrollvorrichtungen 30 angeordnet. Diese sind mit Mitteln zum Senden und Empfangen von Signalen ausgestattet, wie sie in der Ultra-Breitband-Technologie eingesetzt werden. Weiterhin ist jedes Flurförderzeug 10, 11, 12 und jede Person 20 in der Warenlogistikeinrichtung mit einer Sende- und Empfangsvorrichtung 13, 23 ausgestattet, die über auf der Ultra-Breitband-Technologie basierende Mittel zur Signalübertragung mit den Gefahrenbereichskontrollvorrichtungen 30 verfügt. Bei den Flurförderzeugen 10, 11, 12 ist die Sende- und Empfangsvorrichtung 13 zudem mit einem Steuerungssystem des Flurförderzeugs 10, 11, 12 verbunden und kann in dieses eingreifen, beispielsweise um das Flurförderzeug 10, 11, 12 abzubremsen.

Die Gefahrenbereichskontrollvorrichtungen 30 spannen jeweils einen Eingriffsbereich 5 auf. Durch Laufzeitmessung zwischen Gefahrenbereichskontrollvorrichtung 30 und den Sende- und Empfangsvorrichtungen 13, 23 wird bestimmt, ob sich Flurförderzeuge 10, 11, 12 oder Personen 20 in den Eingriffsbereichen 5 befinden. Befindet sich sowohl ein Flurförderzeug 10, 11, 12 als auch ein weiteres bewegliches Objekt, also beispielsweise ein anderes Flurförderzeug 10, 11, 12 oder eine Person 20 in dem Eingriffsbereich 5, so wird das Flurförderzeug 10, 11, 12 auf eine Sicherheitsgeschwindigkeit abgebremst.

In dem in Fig. 1 gezeigten Beispiel wird auf diese Weise eine Kollision zwischen dem Flurförderzeug 10 und der Person 20 sowie zwischen den Flurförderzeugen 11 und 12 vermieden, da die Flurförderzeuge 10, 11, 12 und die Person 20 durch das Abbremsen der Flurförderzeuge 10, 11, 12 auf die Sicherheitsgeschwindigkeit genug Zeit haben, um Maßnahmen zur Vermeidung einer Kollision zu treffen, beispielsweise einander auszuweichen.

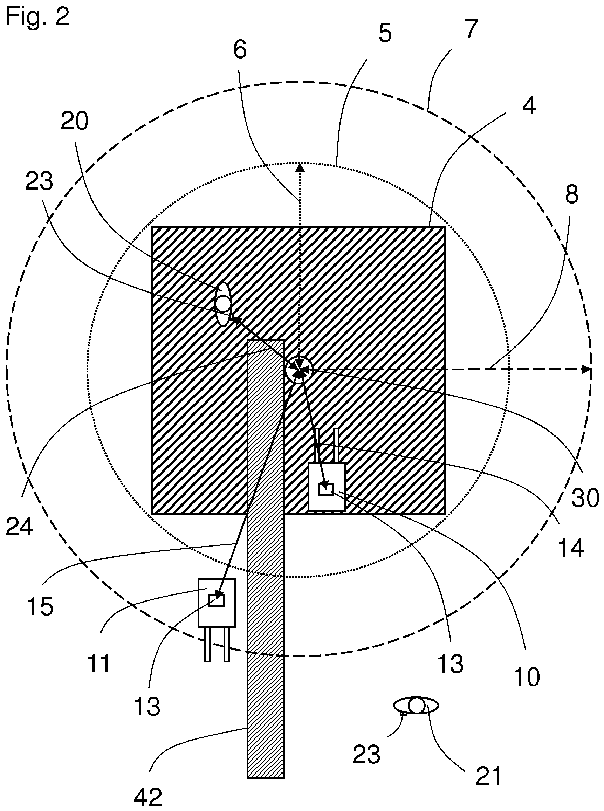

Eine vergrößerte Darstellung eines Gefahrenbereichs 4 mit einem erfindungsgemäßen System zur Kollisionsvermeidung ist schematisch in Fig. 2 dargestellt. An dem Korridorausgang des Regals 42 existiert ein Gefahrenbereich 4, in dem eine erhöhte Kollisionsgefahr besteht. Zur Verringerung dieser Kollisionsgefahr ist am Korridorausgang des Regals 42 die Gefahrenbereichskontrollvorrichtung 30 angeordnet. Um die Gefahrenbereichskontrollvorrichtung 30 herum erstreckt sich kreisförmig der Eingriffsbereich 5 mit dem Eingriffsbereichsabstand 6 als Radius, wobei die Gefahrenbereichskontrollvorrichtung 30 den Mittelpunkt des Eingriffsbereichs 5 bildet. Dieser Eingriffsbereich 5 schließt den Gefahrenbereich 4 vollständig ein.

Das Flurförderzeug 10 befindet sich innerhalb des Eingriffsbereichs 5. Dies wird festgestellt, indem mittels Laufzeitmessung eines Signals zwischen der Sende- und Empfangsvorrichtung 13 und der Gefahrenbereichskontrollvorrichtung 30 ein erster Abstand 14 ermittelt wird. Ist dieser erste Abstand 14 kleiner oder gleich dem Eingriffsbereichsabstand 6, so wird das Flurförderzeug 10 als sich im Eingriffsbereich 5 befindend festgestellt. Auf dieselbe Weise wird auch der zweite Abstand 24 der Person 20 von der Gefahrenbereichskontrollvorrichtung 30 ermittelt und festgestellt, ob sich die Person 20 im Eingriffsbereich 5 befindet. Ist sowohl der erste Abstand 14 als auch der zweite Abstand 24 kleiner oder gleich dem Eingriffsbereichsabstand 6, wie dies im in Fig. 2 gezeigten Beispiel der Fall ist, so wird die Geschwindigkeit des Flurförderzeugs 10 begrenzt, insbesondere wird das Flurförderzeug 10 auf eine Sicherheitsgeschwindigkeit abgebremst.

Die Abstände 14, 24 können entweder am Ort der Sende- und Empfangsvorrichtungen 13, 23 oder am Ort der Gefahrenbereichskontrollvorrichtung 30 ermittelt werden. Beispielsweise wird der erste Abstand 14 und der zweite Abstand 24 durch Senden eines ersten Signals von den Sende- und Empfangsvorrichtungen 13, 23 an die Gefahrenbereichskontrollvorrichtung 30, Zurücksenden eines zweiten Signals von der Gefahrenbereichskontrollvorrichtung 30 an die Sende- und Empfangsvorrichtungen 13, 23 und Messung der Laufzeit am Ort der Sende- und Empfangsvorrichtungen 13, 23 ermittelt. Anschließend werden die ermittelten Abstände 14, 24 mittels Signalübertragung an die Gefahrenbereichskontrollvorrichtung 30 gesendet. Alternativ kann auch direkt die Gefahrenbereichskontrollvorrichtung 30 die Abstände 14, 24 mit umgekehrter Reihenfolge der Signalübertragungen bestimmen.

Ebenso kann der Abgleich der Abstände 14, 24 mit dem Eingriffsbereichsabstand 6 von der Gefahrenbereichskontrollvorrichtung 30 oder dem Steuerungssystem des Flurförderzeugs 10 durchgeführt werden. In letzterem Fall wird zuvor der zweite Abstand 24 und gegebenenfalls auch der erste Abstand 14 von der Gefahrenbereichskontrollvorrichtung 30 an die erste Sende- und Empfangsvorrichtung 13 übermittelt.

Das Begrenzen der Geschwindigkeit des Flurförderzeugs 10 findet dann entweder durch einen Eingriff der Gefahrenbereichskontrollvorrichtung 30 in das Steuerungssystem des Flurförderzeugs 10 oder direkt durch das Steuerungssystem des Flurförderzeugs 10 statt.

In jedem Fall ist es sinnvoll, sowohl den ersten Abstand 14 als auch den zweiten Abstand 24 der Gefahrenbereichskontrollvorrichtung 30 mitzuteilen. Dadurch sind diese Abstände 14, 24 an einer zentralen Stelle verfügbar und können allen Flurförderzeugen 10, 11 und Personen 20 in Kommunikationsreichweite mitgeteilt werden. Eine direkte Signalübertragung zwischen der ersten Sende- und Empfangsvorrichtung 13 und der zweiten Sende- und Empfangsvorrichtung 23 findet im Rahmen des Verfahrens nicht statt.

Zudem wird in der in Fig. 2 gezeigten Ausführungsform durch die Gefahrenbereichskontrollvorrichtung 30 auch ein kreisförmiger Kontrollbereich 7 festgelegt, dessen Radius dem Kontrollbereichsabstand 8 entspricht und wobei die Gefahrenbereichskontrollvorrichtung 30 den Mittelpunkt des Kontrollbereichs 7 bildet.

Der Kontrollbereichsabstand 8 ist in der Fig. 2 gezeigten Ausführungsform größer als der Eingriffsbereichsabstand 6, so dass der Kontrollbereich 7 größer als der Eingriffsbereich 5 ist. Alle beweglichen Objekte mit einer Sende- und Empfangsvorrichtung 13, 23 innerhalb des Kontrollbereichs 7 werden in eine Kontrollliste eingetragen und aus der Kontrollliste gelöscht, wenn sie den Kontrollbereich 7 verlassen. Diese Liste kann beispielsweise Fahrern der Flurförderzeuge 10, 11 in dem Kontrollbereich 7 angezeigt werden, um diese über andere Flurförderzeuge 10, 11 oder Personen 20 in der Nähe des Gefahrenbereichs 4 zu informieren. Dem Fahrer eines Flurförderzeugs 10, 11 wird beispielsweise eine akustische oder optische Warnung ausgegeben, wenn sich neben dem eigenen Flurförderzeug 10, 11 noch ein weiteres bewegliches Objekt in dem Kontrollbereich 7 befindet.

Der Abstand 15 des weiteren Flurförderzeugs 11 ist in Fig. 2 größer als der Eingriffsbereichsabstand 6, aber kleiner als der Kontrollbereichsabstand 8. Das Flurförderzeug 11 befindet sich daher im Kontrollbereich 7, aber nicht im Eingriffsbereich 5 und ist somit in der Kontrollliste eingetragen, wird aber nicht abgebremst. Die Person 21 befindet sich hingegen außerhalb des Kontrollbereichs 7, so dass die Person 21 auch nicht in der Kontrollliste geführt wird.

Der Kontrollbereichsabstand 8 kann beispielsweise der Kommunikationsreichweite zwischen Gefahrenbereichskontrollvorrichtung 30 und den Sende- und Empfangsvorrichtungen 13, 23 entsprechen, so dass die Flurförderzeuge 10, 11 und die Personen 20, 21 rechtzeitig in die Kontrollliste eingetragen werden. Die Kommunikationsreichweite entspricht dabei einem Abstand, der mittels Laufzeitmessung noch zuverlässig zu bestimmen ist. Unterscheidet sich beispielsweise eine erste Kommunikationsreichweite zwischen der Gefahrenbereichskontrollvorrichtung 30 und der ersten Sende- und Empfangsvorrichtung 13 des Flurförderzeugs 10 von einer zweiten Kommunikationsreichweite zwischen der Gefahrenbereichskontrollvorrichtung 30 und der zweiten Sende- und Empfangsvorrichtung 23 der Person 20, so wird entweder die kleinere Kommunikationsreichweite verwendet, oder der Kontrollbereichsabstand 8 unterscheidet sich für das Flurförderzeug 10 von dem Kontrollbereichsabstand 8 für die Person 20.

Der Eingriffsbereichsabstand 6 wird hingegen gezielt kleiner als die Kommunikationsreichweite oder Kommunikationsreichweiten gewählt, so dass der Eingriffsbereichsabstand 6 nicht abhängig von unterschiedlichen Kommunikationsreichweiten zwischen der Gefahrenbereichskontrollvorrichtung 30 und den Sende- und Empfangsvorrichtungen 13, 23 ist.

Die Form und Größe der Warenlogistikeinrichtung 2, der Gefahrenbereiche 4, der Gefahrenbereichskontrollvorrichtung 30, der Eingriffsbereiche 5, der Kontrollbereiche 7, der Flurförderzeuge 10, 11, 12 und der Personen 20, 21 sind in Fig. 1 und Fig. 2 nach Gesichtspunkten einer guten Darstellbarkeit gewählt und entsprechen nicht notwendigerweise der Form und Größe, die diese in einer Umsetzung des erfindungsgemäßen Verfahrens und des erfindungsgemä-ßen Systems aufweisen.

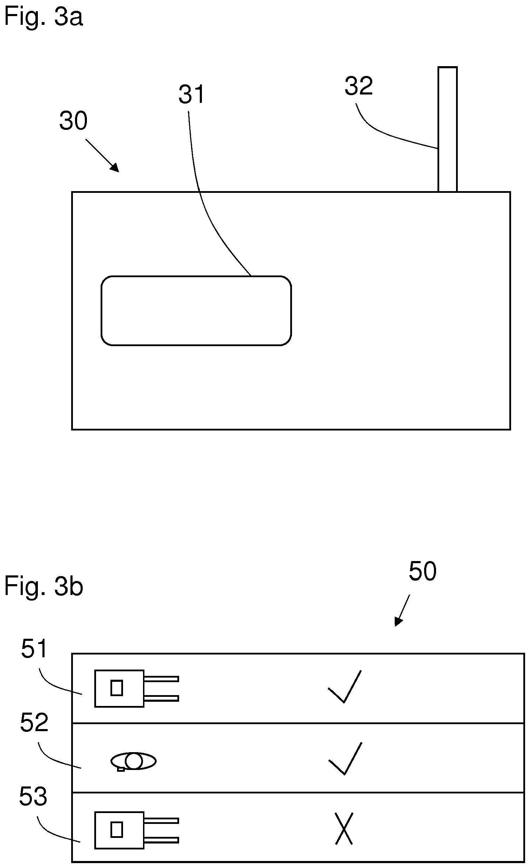

Fig. 3a zeigt eine schematische Darstellung der Gefahrenbereichskontrollvorrichtung 30. Diese verfügt über Kommunikationsmittel 32, beispielsweise eine Antenne, zur Signalübertragung mit den Sende- und Empfangsvorrichtungen 13, 23. Für diese Signalübertragung wird bevorzugt Ultra-Breitband-Technologie eingesetzt. Gemäß einer Ausführungsform können die Kommunikationsmittel 32 auch zur Kommunikation mit anderen Gefahrenbereichskontrollvorrichtungen 30 und/oder weiteren Vorrichtungen, beispielsweise einem Computer zur Konfiguration des Systems zur Kollisionsüberwachung, vorgesehen sein. Weiterhin umfasst die Gefahrenbereichskontrollvorrichtung 30 wenigstens ein Speichermedium 31, auf dem die Kontrollliste gespeichert wird. Alternativ oder zusätzlich können auch die Flurförderzeuge 10, 11, 12 mit Datenverarbeitungseinrichtungen, beispielsweise Computern, ausgestattet sein, die entsprechende Speichermedien 31 umfassen, auf denen die Kontrollliste gespeichert ist.

In Fig. 3b ist schematisch eine Kontrollliste 50 dargestellt, wie sie für den in Fig. 2 gezeigten Fall angelegt wird. Alle beweglichen Objekte im Kontrollbereich 7 werden in die Kontrollliste 50 eingetragen, also die Flurförderzeuge 10, 11 und die Person 20. Für jede von diesen beweglichen Objekten wird ein Aufenthaltseintrag 51, 52, 53 angelegt. Befindet sich das bewegliche Objekt zudem in dem Eingriffsbereich 5, so wird dies in der Kontrollliste vermerkt. Dies ist in Fig. 3b durch einen Haken dargestellt. Das Flurförderzeug 11, das sich in Fig. 2 außerhalb des Eingriffsbereichs 5 aufhält, wird hingegen als sich außerhalb des Eingriffsbereichs 5 befindlich gekennzeichnet, was in Fig. 3b durch ein X dargestellt ist. Zudem ist in der Kontrollliste vermerkt, ob es sich um einen Aufenthaltseintrag 51, 53 für ein Flurförderzeug 10, 11 oder um einen Aufenthaltseintrag 52 für eine Person handelt. Dies wird beispielsweise über die Art der verwendeten Sende- und Empfangsvorrichtung 13, 23 erkannt. Enthält die Kontrollliste 50 wenigstens zwei Aufenthaltseinträge 51, 52, die zudem als sich innerhalb des Eingriffsbereichs 5 befindlich gekennzeichnet sind, wobei wenigstens einer dieser wenigstens zwei Aufenthaltseinträge 51, 52 einem Flurförderzeug 10 zugeordnet ist, so werden alle Flurförderzeuge 10 innerhalb des Eingriffsbereichs 5 auf die Sicherheitsgeschwindigkeit abgebremst.

Verlässt ein bewegliches Objekt den Kontrollbereich 7, so wird der entsprechende Aufenthaltseintrag 51, 52, 53 aus der Kontrollliste gelöscht. Die Person 21 aus Fig. 2 ist außerhalb des Kontrollbereichs 7 und ist somit nicht in der Kontrollliste 50 eingetragen.

Eine Anzeige, die in etwa der Darstellung aus Fig. 3b entspricht, kann beispielsweise einem Fahrer eines Flurförderzeugs in dem Kontrollbereich 7 angezeigt werden, damit dieser über andere bewegliche Objekte in der Nähe des Gefahrenbereichs 4 informiert ist.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein, solange sie durch die beigefügten Ansprüche abgedeckt sind. Im Rahmen der Erfindung sind Merkmale, die mit "insbesondere" oder "vorzugsweise" gekennzeichnet sind, als fakultative Merkmale zu verstehen.

### Bezuaszeichenliste

- 2: Warenlogistikeinrichtung
- 4: Gefahrenbereich
- 5: Eingriffsbereich
- 6: Eingriffsbereichsabstand
- 7: Kontrollbereich
- 8: Kontrollbereichsabstand
- 10, 11, 12: Flurförderzeug
- 13: erste Sende- und Empfangsvorrichtung
- 14, 15: Abstand
- 20, 21: Person
- 23: zweite Sende- und Empfangsvorrichtung
- 24: Abstand
- 30: Gefahrenbereichskontrollvorrichtung
- 31: Speichermedium
- 32: Kommunikationsmittel
- 42: Regal
- 43: Hallenausfahrt
- 50: Kontrollliste
- 51: erster Aufenthaltseintrag
- 52: zweiter Aufenthaltseintrag
- 53: dritter Aufenthaltseintrag

## Patentansprüche

1. Verfahren zur Kollisionsvermeidung in einem Gefahrenbereich (4) einer Warenlogistikeinrichtung (2), wobei ein erster Abstand (14) zwischen einer ortsfesten Gefahrenbereichskontrollvorrichtung (30), die innerhalb des Gefahrenbereichs (4) angeordnet ist, und einer ersten Sende- und Empfangsvorrichtung (13) ermittelt wird, wobei ein zweiter Abstand (24) zwischen der Gefahrenbereichskontrollvorrichtung (30) und einer zweiten Sende- und Empfangsvorrichtung (23) ermittelt wird, wobei die erste Sende- und Empfangsvorrichtung (13) an einem Flurförderzeug (10, 11, 12) angeordnet und mit einem Steuerungssystem des Flurförderzeugs (10, 11, 12) verbunden ist und die zweite Sende- und Empfangsvorrichtung (23) an einem beweglichen Objekt angeordnet ist, **dadurch gekennzeichnet, dass** ermittelt wird, ob der erste Abstand (14) und der zweite Abstand (24) kleiner oder gleich einem vorgebbaren Eingriffsbereichsabstand (6) sind, wobei eine Kollisionsvermeidungsaktion ausgeführt wird, wenn sowohl der erste Abstand (14) als auch der zweite Abstand (24) kleiner oder gleich dem vorgebbaren Eingriffsbereichsabstand (6) sind.

2. Verfahren nach Anspruch 1, **dadurch gekennzeichnet, dass** der erste Abstand (14) mittels Laufzeitmessung eines Signals zwischen der Gefahrenbereichskontrollvorrichtung (30) und der ersten Sende- und Empfangsvorrichtung (13) und/oder der zweite Abstand (24) mittels Laufzeitmessung eines Signals zwischen der Gefahrenbereichskontrollvorrichtung (30) und der zweiten Sende- und Empfangsvorrichtung (23) ermittelt wird.

3. Verfahren nach Anspruch 1 oder 2, **dadurch gekennzeichnet, dass** als Kollisionsvermeidungsaktion eine Geschwindigkeit des Flurförderzeugs (10, 11, 12) begrenzt wird.

4. Verfahren nach Anspruch 1 bis 3, **dadurch gekennzeichnet, dass** das Flurförderzeug (10, 11, 12) auf eine vorgebbare Sicherheitsgeschwindigkeit abgebremst wird, wenn sowohl der erste Abstand (14) als auch der zweite Abstand (24) kleiner oder gleich dem vorgebbaren Eingriffsbereichsabstand (6) ist und eine Geschwindigkeit des Flurförderzeugs (10, 11, 12) größer als die vorgebbare Sicherheitsgeschwindigkeit ist.

5. Verfahren nach einem der Ansprüche 1 bis 4, **dadurch gekennzeichnet, dass** der Eingriffsbereichsabstand (6) so vorgegeben wird, dass eine erste Kommunikationsreichweite zwischen Gefahrenbereichskontrollvorrichtung (30) und der ersten Sende- und Empfangsvorrichtung (13) und/oder eine zweite Kommunikationsreichweite zwischen Gefahrenbereichskontrollvorrichtung (30) und der zweiten Sende- und Empfangsvorrichtung (23) größer als der Eingriffsbereichsabstand (6) ist, wobei die erste Kommunikationsreichweite einer maximalen Entfernung entspricht, bei der der erste Abstand (14) mittels Laufzeitmessung zuverlässig bestimmbar ist und die zweite Kommunikationsreichweite einer maximalen Entfernung entspricht, bei der der zweite Abstand (24) mittels Laufzeitmessung zuverlässig bestimmbar ist.

6. Verfahren nach einem der Ansprüche 1 bis 5, **dadurch gekennzeichnet, dass** auf einem Speichermedium (31) der Gefahrenbereichskontrollvorrichtung (30) eine Kontrollliste (50) gespeichert wird, wobei ein erster Aufenthaltseintrag (51) in die Kontrollliste (50) eingetragen wird, wenn der erste Abstand (14) kleiner oder gleich einem Kontrollbereichsabstand (8) ist und der erste Aufenthaltseintrag (51) noch nicht in die Kontrollliste (50) eingetragen ist, wobei der erste Aufenthaltseintrag (51) aus der Kontrollliste (50) ausgetragen wird, wenn der erste Abstand (14) größer als der Kontrollbereichsabstand (8) ist, wobei insbesondere der Kontrollbereichsabstand (8) größer als der Eingriffsbereichsabstand (6) ist, wobei insbesondere der Kontrollbereichsabstand (8) einer ersten Kommunikationsreichweite zwischen Gefahrenbereichskontrollvorrichtung (30) und erster Sende- und Empfangsvorrichtung (13) entspricht.

7. Verfahren nach Anspruch 6, **dadurch gekennzeichnet, dass** ein zweiter Aufenthaltseintrag (52) in die Kontrollliste (50) eingetragen wird, wenn der zweite Abstand (24) kleiner oder gleich dem Kontrollbereichsabstand (8) ist und der zweite Aufenthaltseintrag (52) noch nicht in die Kontrollliste (50) eingetragen ist, wobei der zweite Aufenthaltseintrag (52) aus der Kontrollliste (50) ausgetragen wird, wenn der zweite Abstand (24) größer als der Kontrollbereichsabstand (8) ist.

8. Verfahren nach Anspruch 7, **dadurch gekennzeichnet, dass** auf einer Anzeige des Flurförderzeugs (10, 11, 12) eine Warnung angezeigt wird und/oder am Flurförderzeug (10, 11, 12) eine akustische Warnung ausgegeben wird, solange der erste Aufenthaltseintrag (51) und der zweite Aufenthaltseintrag (52) in der Kontrollliste (50) eingetragen sind.

9. Verfahren nach einem der Ansprüche 1 bis 8, **dadurch gekennzeichnet, dass** die Laufzeitmessung des Signals zwischen der Gefahrenbereichskontrollvorrichtung (30) und der ersten Sende- und Empfangsvorrichtung (13) und/oder die Laufzeitmessung des Signals zwischen der Gefahrenbereichskontrollvorrichtung (30) und der zweiten Sende- und Empfangsvorrichtung (23) und/oder andere Signalübertragungen zwischen der ersten Sende- und Empfangsvorrichtung (13) und der Gefahrenbereichskontrollvorrichtung (30) und/oder zwischen der zweiten Sende- und Empfangsvorrichtung (23) und der Gefahrenbereichskontrollvorrichtung (30) mittels Ultra-Breitband-Technologie durchgeführt werden.

10. System zur Kollisionsvermeidung in einem Gefahrenbereich (4) einer Warenlogistikeinrichtung (2), wobei das System eine ortsfeste Gefahrenbereichskontrollvorrichtung (30), die innerhalb des Gefahrenbereichs (4) angeordnet ist, eine erste Sende- und Empfangsvorrichtung (13), die an einem Flurförderzeug (10, 11, 12) angeordnet und mit einem Steuerungssystem des Flurförderzeugs (10, 11, 12) verbunden ist, und eine zweite Sende- und Empfangsvorrichtung (23), die an einem beweglichen Objekt angeordnet ist, umfasst, wobei das System dazu eingerichtet ist, einen ersten Abstand (14) zwischen der Gefahrenbereichskontrollvorrichtung (30) und der ersten Sende- und Empfangsvorrichtung (13) und einen zweiten Abstand (24) zwischen der Gefahrenbereichskontrollvorrichtung (30) und der zweiten Sende- und Empfangsvorrichtung (23) zu ermitteln, **dadurch gekennzeichnet, dass** das System dazu eingerichtet ist, zu ermitteln, ob der erste Abstand (14) und der zweite Abstand (24) kleiner oder gleich einem vorgebbaren Eingriffsbereichsabstand (6) sind, wobei das System ferner dazu eingerichtet ist, eine Kollisionsvermeidungsaktion auszuführen, wenn sowohl der erste Abstand (14) als auch der zweite Abstand (24) kleiner oder gleich dem vorgebbaren Eingriffsbereichsabstand (6) sind.

11. System nach Anspruch 10, **dadurch gekennzeichnet, dass** das System dazu eingerichtet ist, den ersten Abstand (14) mittels Laufzeitmessung eines Signals zwischen der Gefahrenbereichskontrollvorrichtung (30) und der ersten Sende- und Empfangsvorrichtung (23) und/oder den zweiten Abstand (24) mittels Laufzeitmessung eines Signals zwischen der Gefahrenbereichskontrollvorrichtung (30) und der zweiten Sende- und Empfangsvorrichtung (23) zu ermitteln.

12. System nach Anspruch 10 oder 11, **dadurch gekennzeichnet, dass** das System dazu eingerichtet ist, als Kollisionsvermeidungsaktion eine Geschwindigkeit des Flurförderzeugs (10, 11, 12) zu begrenzen.

13. System nach einem der Ansprüche 10 bis 12, **dadurch gekennzeichnet, dass** das System dazu eingerichtet ist, das Flurförderzeug (10, 11, 12) auf eine vorgebbare Sicherheitsgeschwindigkeit abzubremsen, wenn sowohl der erste Abstand (14) als auch der zweite Abstand (24) kleiner oder gleich dem vorgebbaren Eingriffsbereichsabstand (6) ist und eine Geschwindigkeit des Flurförderzeugs (10, 11, 12) größer als die vorgebbare Sicherheitsgeschwindigkeit ist.

14. System nach einem der Ansprüche 10 bis 13, **dadurch gekennzeichnet, dass** der Eingriffsbereichsabstand (6) so vorgegeben ist, dass eine erste Kommunikationsreichweite zwischen Gefahrenbereichskontrollvorrichtung (30) und der ersten Sende- und Empfangsvorrichtung (13) und/oder eine zweite Kommunikationsreichweite zwischen Gefahrenbereichskontrollvorrichtung (30) und der zweiten Sende- und Empfangsvorrichtung (23) größer als der Eingriffsbereichsabstand (6) ist, wobei die erste Kommunikationsreichweite einer maximalen Entfernung entspricht, bei der der erste Abstand (14) mittels Laufzeitmessung zuverlässig bestimmbar ist und die zweite Kommunikationsreichweite einer maximalen Entfernung entspricht, bei der der zweite Abstand (24) mittels Laufzeitmessung zuverlässig bestimmbar ist.

15. System nach einem der Ansprüche 10 bis 14, **dadurch gekennzeichnet, dass** das System dazu eingerichtet ist, für die Laufzeitmessung des Signals zwischen der Gefahrenbereichskontrollvorrichtung (30) und der ersten Sende- und Empfangsvorrichtung (13) und/oder für die Laufzeitmessung des Signals zwischen der Gefahrenbereichskontrollvorrichtung (30) und der zweiten Sende- und Empfangsvorrichtung (23) und/oder für andere Signalübertragungen zwischen der ersten Sende- und Empfangsvorrichtung (13) und der Gefahrenbereichskontrollvorrichtung (30) und/oder zwischen der zweiten Sende- und Empfangsvorrichtung (23) und der Gefahrenbereichskontrollvorrichtung (30) Ultra-Breitband-Technologie einzusetzen.

## Claims

1. A method for collision avoidance in a hazardous area (4) of a logistics facility for goods (2), wherein a first distance (14) between a stationary hazardous area monitoring device (30) which is disposed within the hazardous area (4), and a first sending and receiving device (13) is determined, wherein a second distance (24) between the hazardous area monitoring device (30) and a second sending and receiving device (23) is determined, wherein the first sending and receiving device (13) is disposed on an industrial truck (10, 11, 12) and is connected to a control system of the industrial truck (10, 11, 12), and the second sending and receiving device (23) is disposed on a movable object, **characterized in that** a determination is made as to whether the first distance (14) and the second distance (24) are less than or equal to a predeterminable intervention area distance (6), wherein a collision avoidance action is carried out if both the first distance (14) and the second distance (24) are less than or equal to the predeterminable intervention area distance (6).

2. The method according to claim 1, **characterized in that** the first distance (14) is determined by measurement of the transit time of a signal between the hazardous area monitoring device (30) and the first sending and receiving device (13), and/or the second distance (24) is determined by measurement of the transit time of a signal between the hazardous area monitoring device (30) and the second sending and receiving device (23).

3. The method according to claim 1 or 2, **characterized in that**, as a collision avoidance action, a speed of the industrial truck (10, 11, 12) is limited.

4. The method according to claims 1 to 3, **characterized in that** the industrial truck (10, 11, 12) is decelerated to a predeterminable safe speed, if both the first distance (14) and the second distance (24) are less than or equal to the predeterminable intervention area distance (6), and a speed of the industrial truck (10, 11, 12) is greater than the predeterminable safe speed.

5. The method according to one of claims 1 to 4, **characterized in that** the intervention area distance (6) is predetermined such that a first communication range, between the hazardous area monitoring device (30) and the first sending and receiving device (13), and/or a second communication range, between the hazardous area monitoring device (30) and the second sending and receiving device (23), are greater than the intervention area distance (6), wherein the first communication range corresponds to a maximum separation at which the first distance (14) is reliably determinable by transit time measurement, and the second communication range corresponds to a maximum separation at which the second distance (24) is reliably determinable by transit time measurement.

6. The method according to one of claims 1 to 5, **characterized in that** a monitoring list (50) is stored in a storage medium (31) of the hazardous area monitoring device (30), wherein a first presence indication entry (51) is entered into the monitoring list (50) if the first distance (14) is less than or equal to a monitoring area distance (8) and the first presence indication entry (51) has not yet been entered into the monitoring list (50), wherein the first presence indication entry (51) is deleted from the monitoring list (50) if the first distance (14) is greater than the monitoring area distance (8), wherein in particular the monitoring area distance (8) is greater than the intervention area distance (6), and wherein in particular the monitoring area distance (8) corresponds to a first communication range between the hazardous area monitoring device (30) and the first sending and receiving device (13).

7. The method according to claim 6, **characterized in that** a second presence indication entry (52) is entered into the monitoring list (50) if the second distance (24) is less than or equal to the monitoring area distance (8) and the second presence indication entry (52) has not yet been entered into the monitoring list (50), wherein the second presence indication entry (52) is deleted from the monitoring list (50) if the second distance (24) is greater than the monitoring area distance (8).

8. The method according to claim 7, **characterized in that** a warning is displayed on a display means of the industrial truck (10, 11, 12), and/or an acoustic warning is effected on the industrial truck (10, 11, 12), as long as the first presence indication entry (51) and the second presence indication entry (52) are included in the monitoring list (50).

9. The method according to one of claims 1 to 8, **characterized in that** the measurement of the transit time of the signal between the hazardous area monitoring device (30) and the first sending and receiving device (13), and/or the measurement of the transit time of the signal between the hazardous area monitoring device (30) and the second sending and receiving device (23), and/or other signal transmissions between the first sending and receiving device (13) and the hazardous area monitoring device (30) and/or between the second sending and receiving device (23) and the hazardous area monitoring device (30) is (are) carried out by means of ultra-broadband technology.

10. A system for collision avoidance in a hazardous area (4) of a logistics facility for goods (2), wherein the system comprises a stationary hazardous area monitoring device (30) which is disposed within the hazardous area (4), a first sending and receiving device (13), which is disposed on an industrial truck (10, 11, 12) and is connected to a control system of the industrial truck (10, 11, 12), and a second sending and receiving device (23), which is disposed on a movable object, the system being designed to determine a first distance (14) between the hazardous area monitoring device (30) and the first sending and receiving device (13), and a second distance (24) between the hazardous area monitoring device (30) and the second sending and receiving device (23), **characterized in that** the system is configured to determine whether the first distance (14) and the second distance (24) are less than or equal to a predeterminable intervention area distance (6), wherein the system is further configured to carry out a collision avoidance action when both the first distance (14) and the second distance (24) are less than or equal to the predeterminable intervention area distance (6).

11. The system according to claim 10, **characterized in that** the system is configured to determine the first distance (14) by measurement of the transit time of a signal between the hazardous area monitoring device (30) and the second sending and receiving device (23), and/or the system is configured to determine the second distance (24) by measurement of the transit time of a signal between the hazardous area monitoring device (30) and the second sending and receiving device (23).

12. The system according to claim 10 or 11, **characterized in that** the system is configured such that, as a collision avoidance action, a speed of the industrial truck (10, 11, 12) is limited.

13. The system according to one of claims 10 to 12, **characterized in that** the system is configured such that the industrial truck (10, 11, 12) is decelerated to a predeterminable safe speed, if both the first distance (14) and the second distance (24) are less than or equal to the predeterminable intervention area distance (6), and a speed of the industrial truck (10, 11, 12) is greater than the predeterminable safe speed.

14. The system according to one of claims 10 to 13, **characterized in that** the intervention area distance (6) is predetermined such that a first communication range, between the hazardous area monitoring device (30) and the first sending and receiving device (13), and/or a second communication range, between the hazardous area monitoring device (30) and the second sending and receiving device (23) are greater than the intervention area distance (6), wherein the first communication range corresponds to a maximum separation at which the first distance (14) is reliably determinable by transit time measurement, and the second communication range corresponds to a maximum separation at which the second distance (24) is reliably determinable by transit time measurement.

15. The system according to one of claims 10 to 14, **characterized in that** the system is configured such that the measurement of the transit time of the signal between the hazardous area monitoring device (30) and the first sending and receiving device (13), and/or the measurement of the transit time of the signal between the hazardous area monitoring device (30) and the second sending and receiving device (23), and/or other signal transmissions between the first sending and receiving device (13) and the hazardous area monitoring device (30) and/or between the second sending and receiving device (23) and the hazardous area monitoring device (30) is (are) carried out by means of ultra-broadband technology.

## Revendications

1. Procédé permettant d'éviter les collisions dans une zone dangereuse (4) d'un dispositif de logistique de marchandises (2), dans lequel une première distance (14) est déterminée entre une unité de contrôle de la zone dangereuse fixe (30), qui est disposée à l'intérieur de la zone dangereuse (4), et une première unité d'émission et de réception (13), dans lequel une seconde distance (24) est déterminée entre l'unité de contrôle de la zone dangereuse (30) et une seconde unité d'émission et de réception (23), dans lequel la première unité d'émission et de réception (13) est disposée sur un chariot de manutention (10, 11, 12) et est reliée à un système de commande du chariot de manutention (10, 11, 12) et la seconde unité d'émission et de réception (23) est disposée sur un objet mobile, **caractérisé en ce qu'**il est déterminé si la première distance (14) et la seconde distance (24) sont plus petites ou égales à une distance de la zone d'intervention prédéfinissable (6), dans lequel une action d'évitement de collision est exécutée, si tant la première distance (14) que la seconde distance (24) sont plus petites ou égales à la distance de la zone d'intervention prédéfinissable (6).

2. Procédé selon la revendication 1, **caractérisé en ce que** la première distance (14) est déterminée par la mesure du temps de propagation d'un signal entre l'unité de contrôle de la zone dangereuse (30) et la première unité d'émission et de réception (13) et/ou la seconde distance (24) est déterminée par la mesure du temps de propagation d'un signal entre l'unité de contrôle de la zone dangereuse (30) et la seconde unité d'émission et de réception (23).

3. Procédé selon la revendication 1 ou 2, **caractérisé en ce qu'**une vitesse du chariot de manutention (10, 11, 12) est limitée comme action d'évitement de collision.

4. Procédé selon la revendication 1 à 3, **caractérisé en ce que** le chariot de manutention (10, 11, 12) est ralenti à une vitesse de sécurité prédéfinissable, si tant la première distance (14) que la seconde distance (24) sont plus petites ou égales à la distance de la zone d'intervention prédéfinissable (6) et qu'une vitesse du chariot de manutention (10, 11, 12) est supérieure à la vitesse de sécurité prédéfinissable.

5. Procédé selon l'une des revendications 1 à 4, **caractérisé en ce que** la distance de la zone d'intervention (6) est prédéfinie de sorte qu'une première portée de communication entre l'unité de contrôle de la zone dangereuse (30) et la première unité d'émission et de réception (13) et/ou une seconde portée de communication entre l'unité de contrôle de la zone dangereuse (30) et la seconde unité d'émission et de réception (23) sont supérieures à la distance de la zone d'intervention (6), dans lequel la première portée de communication correspond à un éloignement maximal, auquel cas la première distance (14) est déterminable avec fiabilité moyennant la mesure du temps de propagation et la seconde portée de communication correspond à un éloignement maximal, auquel cas la seconde distance (24) est déterminable avec fiabilité moyennant la mesure du temps de propagation.

6. Procédé selon l'une des revendications 1 à 5, **caractérisé en ce qu'**une liste de contrôle (50) est enregistrée sur un support de stockage (31) de l'unité de contrôle de la zone dangereuse (30), dans lequel une première saisie de séjour (51) figure dans la liste de contrôle (50), si la première distance (14) est plus petite ou égale à une distance de la zone de contrôle (8) et que la première saisie de séjour (51) ne figure pas encore dans la liste de contrôle (50), dans lequel la première saisie de séjour (51) est retirée de la liste de contrôle (50), si la première distance (14) est supérieure à la distance de la zone de contrôle (8), dans lequel notamment la distance de la zone de contrôle (8) est supérieure à la distance de la zone d'intervention (6), dans lequel notamment la distance de la zone de contrôle (8) correspond à une première portée de communication entre l'unité de contrôle de la zone dangereuse (30) et la première unité d'émission et de réception (13).

7. Procédé selon la revendication 6, **caractérisé en ce qu'**une seconde saisie de séjour (52) figure dans la liste de contrôle (50), si la seconde distance (24) est plus petite ou égale à la distance de la zone de contrôle (8) et que la seconde saisie de séjour (52) ne figure pas encore dans la liste de contrôle (50), dans lequel la seconde saisie de séjour (52) est retirée de la liste de contrôle (50), si la seconde distance (24) est supérieure à la distance de la zone de contrôle (8).

8. Procédé selon la revendication 7, **caractérisé en ce qu'**un avertissement est visualisé sur un afficheur du chariot de manutention (10, 11, 12) et/ou un avertissement acoustique est émis sur le chariot de manutention (10, 11, 12), tant que la première saisie de séjour (51) et la seconde saisie de séjour (52) figurent dans la liste de contrôle (50).

9. Procédé selon l'une des revendications 1 à 8, **caractérisé en ce que** la mesure du temps de propagation du signal entre l'unité de contrôle de la zone dangereuse (30) et la première unité d'émission et de réception (13) et/ou la mesure du temps de propagation du signal entre l'unité de contrôle de la zone dangereuse (30) et la seconde unité d'émission et de réception (23) et/ou d'autres transmissions de signaux entre la première unité d'émission et de réception (13) et l'unité de contrôle de la zone dangereuse (30) et/ou entre la seconde unité d'émission et de réception (23) et l'unité de contrôle de la zone dangereuse (30) sont effectuées au moyen de la technologie à bande ultralarge.

10. Système permettant d'éviter les collisions dans une zone dangereuse (4) d'un dispositif de logistique de marchandises (2), dans lequel le système comprend une unité de contrôle de la zone dangereuse fixe (30), qui est disposée à l'intérieur de la zone dangereuse (4), et une première unité d'émission et de réception (13), qui est disposée sur un chariot de manutention (10, 11, 12) et est reliée à un système de commande du chariot de manutention (10, 11, 12), et une seconde unité d'émission et de réception (23), qui est disposée sur un objet mobile, dans lequel le système est ajusté de manière à déterminer une première distance (14) entre l'unité de contrôle de la zone dangereuse (30) et la première unité d'émission et de réception (13) et une seconde distance (24) entre l'unité de contrôle de la zone dangereuse (30) et la seconde unité d'émission et de réception (23), **caractérisé en ce que** le système est ajusté de manière à déterminer si la première distance (14) et la seconde distance (24) sont plus petites ou égales à une distance de la zone d'intervention prédéfinissable (6), dans lequel le système est de plus ajusté de manière à exécuter une action d'évitement de collision, si tant la première distance (14) que la seconde distance (24) sont plus petites ou égales à la distance de la zone d'intervention prédéfinissable (6).

11. Système selon la revendication 10, **caractérisé en ce que** le système est ajusté de manière à déterminer la première distance (14) moyennant la mesure du temps de propagation d'un signal entre l'unité de contrôle de la zone dangereuse (30) et la première unité d'émission et de réception (13) et/ou la seconde distance (24) moyennant la mesure du temps de propagation d'un signal entre l'unité de contrôle de la zone dangereuse (30) et la seconde unité d'émission et de réception (23).

12. Système selon la revendication 10 ou 11, **caractérisé en ce que** le système est ajusté de manière à limiter une vitesse du chariot de manutention (10, 11, 12) comme action d'évitement de collision.

13. Système selon l'une des revendications 10 à 12, **caractérisé en ce que** le système est ajusté de manière à ralentir le chariot de manutention (10, 11, 12) à une vitesse de sécurité prédéfinissable, si tant la première distance (14) que la seconde distance (24) sont plus petites ou égales à la distance de la zone d'intervention prédéfinissable (6) et qu'une vitesse du chariot de manutention (10, 11, 12) est supérieure à la vitesse de sécurité prédéfinissable.

14. Système selon l'une des revendications 10 à 13, **caractérisé en ce que** la distance de la zone d'intervention (6) est prédéfinie de sorte qu'une première portée de communication entre l'unité de contrôle de la zone dangereuse (30) et la première unité d'émission et de réception (13) et/ou une seconde portée de communication entre l'unité de contrôle de la zone dangereuse (30) et la seconde unité d'émission et de réception (23) sont supérieures à la distance de la zone d'intervention (6), dans lequel la première portée de communication correspond à un éloignement maximal, auquel cas la première distance (14) est déterminable avec fiabilité moyennant la mesure du temps de propagation et la seconde portée de communication correspond à un éloignement maximal, auquel cas la seconde distance (24) est déterminable avec fiabilité moyennant la mesure du temps de propagation.

15. Système selon l'une des revendications 10 à 14, **caractérisé en ce que** le système est ajusté de manière à utiliser la technologie à bande ultralarge pour la mesure du temps de propagation du signal entre l'unité de contrôle de la zone dangereuse (30) et la première unité d'émission et de réception (13) et/ou pour la mesure du temps de propagation du signal entre l'unité de contrôle de la zone dangereuse (30) et la seconde unité d'émission et de réception (23) et/ou pour d'autres transmissions de signaux entre la première unité d'émission et de réception (13) et l'unité de contrôle de la zone dangereuse (30) et/ou entre la seconde unité d'émission et de réception (23) et l'unité de contrôle de la zone dangereuse (30).
